# EUROPEAN PATENT APPLICATION

(11) **EP 2 559 825 A1**
(43) Date of publication of application: **20.02.2013**
(21) Application number: 11768842.4
(22) Date of filing: 12.04.2011
(51) Int. Cl.: E04D 13/18, H01L 31/042

(54) **SOLAR CELL MODULE SUPPORT STRUCTURE, METHOD OF CONSTRUCTING SAID SUPPORT STRUCTURE, AND SOLAR PHOTOVOLTAIC POWER GENERATION SYSTEM USING SAID SUPPORT STRUCTURE**

(30) Priority: 12.04.2010 JP 2010091686
(71) Applicant: Sharp Kabushiki Kaisha, Osaka-shi, Osaka 545-8522 (JP)
(72) Inventor: SAGAYAMA, Kenichi, Osaka 545-8522 (JP); OHKOSHI, Yasushi, Osaka 545-8522 (JP); OSHIKAWA, Tetsuya, Osaka 545-8522 (JP)
(74) Representative: Müller - Hoffmann & Partner
(86) International application number: PCT/JP2011/059063
(87) International publication number: WO 2011/129321

(57) **Abstract**

The present invention is directed to a solar cell module support structure for supporting a plurality of solar cell modules (2) arranged in row and column directions, including: a matrix coupling fitting (4) in which two engagement portions (4d) respectively facing mutually opposite outer directions are formed; wherein the matrix coupling unit (4) is disposed between rows of four solar cell modules (2) arranged in two rows and two columns, frame members (8) of two of the solar cell modules (2) arranged in one row are engaged with one of the engagement portions (4d) of the matrix coupling unit (4), and frame members (8) of the other two solar cell modules (2) arranged in the other row are engaged with the other engagement portion (4d) of the matrix coupling unit (4), so that the four solar cell modules (2) are coupled to each other with the matrix coupling unit (4).

## Description

### Technical Field

The present invention relates to a solar cell module support structure for supporting a plurality of solar cell modules arranged in row and column directions, a method for installing the support structure, and a solar photovoltaic system using the support structure.

### Background Art

Examples of this sort of solar photovoltaic system include a structure in which a chassis is configured by a plurality of cross-pieces arranged in parallel and fixed, and a plurality of solar cell modules are placed between the cross-pieces of the chassis, supporting the solar cell modules.

In such a chassis, factors such as structure or material of the cross-pieces are determined in order to ensure the strength of the chassis itself. Furthermore, also regarding the solar cell modules, a structure in which the solar cell panels are framed with frame members is applied in order to ensure the strength of the solar cell modules themselves and to protect the solar cell panels.

However, when the solar cell modules are mounted on the chassis, similar members such as the frames of the solar cell modules and the cross-pieces of the chassis are used together, and the number of parts in the entire solar photovoltaic system increases more than necessary.

Meanwhile, in a structure in which the frame members of the solar cell modules are directly fixed to a base using simple fittings or the like, no chassis is required. For example, in Patent Document 1, a solar cell module is placed on two rafters, a frame member of the solar cell module is fixed at four points respectively with attachment members to the two rafters. Furthermore, when a small solar cell module is placed on one rafter, frame members of the small solar cell module are fixed at two points respectively with attachment members to the one rafter, and the frame members of the small solar cell module are coupled with coupling fittings to frame members of other solar cell modules that are placed adjacent to the small solar cell module, thereby increasing the support strength of the small solar cell module.

However, the fixture structure as in Patent Document 1 does not suitably allow a plurality of solar cell modules to be arranged in row and column directions and fixed although it suitably allows a plurality of solar cell modules to be arranged in a column and fixed. For example, unless a space between columns is sufficiently wide, the attachment members or the coupling fittings cannot be attached, and an increase in an unnecessary space that does not contribute to solar photovoltaic power generation cannot be avoided.

### Prior Art Document

### Patent Document

[Patent Document 1] JP 2009-243062A

### Summary of Invention

### Problems to be Solved by the Invention

When the solar cell modules are mounted on the chassis in this manner, similar members such as the frames of the solar cell modules and the cross-pieces of the chassis are used together, and the number of parts in the entire solar photovoltaic system increases more than necessary.

Furthermore, the fixture structure as in Patent Document 1 does not suitably allow a plurality of solar cell modules to be arranged in row and column directions and fixed although it suitably allows a plurality of solar cell modules to be arranged in a column and fixed, an increase in an unnecessary space that does not contribute to solar photovoltaic power generation cannot be avoided.

The present invention was made in view of these conventional problems, and it is an object thereof to provide a solar cell module support structure that suitably allows a plurality of solar cell modules to be arranged in row and column directions and fixed and that can suppress the number of parts, a method for installing the support structure, and a solar photovoltaic system using the support structure.

### Means for Solving the Problems

In order to solve the above-described problems, the present invention is directed to a solar cell module support structure for supporting a plurality of solar cell modules arranged in row and column directions, including: a matrix coupling unit in which two engagement portions respectively facing mutually opposite outer directions are formed; wherein the matrix coupling unit is disposed between rows of four solar cell modules arranged in two rows and two columns, frame members of two of the solar cell modules arranged in one row are engaged with one of the engagement portions of the matrix coupling unit, and frame members of the other two solar cell modules arranged in the other row are engaged with the other engagement portion of the matrix coupling unit, so that the four solar cell modules are coupled to each other with the matrix coupling unit.

When four solar cell modules arranged in two rows and two columns are coupled to each other with the matrix coupling unit in this manner, the solar cell modules arranged in row and column directions can be unitarily supported. Furthermore, since conventional cross-pieces of a chassis and the like are not required, the number of parts can be prevented from increasing more than necessary, and an unnecessary space that does not contribute to solar photovoltaic power generation can be constrained to the fullest extent possible.

Furthermore, in the solar cell module support structure of the present invention, this structure may further include an inter-row coupling unit in which two engagement portions respectively facing mutually opposite outer directions are formed, and the inter-row coupling unit may be disposed between frame members of two solar cell modules arranged in a column, and the frame members of the solar cell modules may be respectively engaged with the engagement portions of the inter-row coupling unit, so that the two solar cell modules are coupled to each other with the inter-row coupling unit.

When this sort of inter-row coupling unit is used together with the matrix coupling unit, the solar cell modules arranged in row and column directions can be unitarily and more firmly supported.

Furthermore, the solar cell module support structure of the present invention may further include means for fixing the inter-row coupling unit to a base of the solar cell module support structure.

With this sort of fixing means, the solar cell modules arranged in row and column directions can be arranged on the base.

Furthermore, in the solar cell module support structure of the present invention, two of the said inter-row coupling units may be used on a solar cell module that is disposed between other solar cell modules on both sides, and points near centers of mutually opposing frame members of the solar cell module may be fixed and supported on the base of the solar cell module support structure.

Since both ends of a solar cell module that is disposed between other solar cell modules on both sides are supported by those solar cell modules on both sides, the solar cell module can be stably supported by merely fixing and supporting points near centers of mutually opposing frame members of the solar cell module.

Furthermore, when points near centers of mutually opposing frame members of the solar cell module are supported, deformation such as warping of the solar cell module can be effectively suppressed.

Furthermore, in the solar cell module support structure of the present invention, the means for fixture to the base of the solar cell module support structure may be a fixture fitting that supports the inter-row coupling unit so as to be movable in the column direction.

Accordingly, the inter-row coupling unit can be easily disposed between the frame members of two solar cell modules arranged in a column.

Furthermore, in the solar cell module support structure of the present invention, the matrix coupling unit may be screwed into the frame members of two solar cell modules that have been engaged with the engagement portion of the matrix coupling unit.

In this case, the matrix coupling unit can be electrically conducted with screws to the frame members of two solar cell modules, and, therefore, the solar cell modules can be arranged so as to be easily grounded.

Furthermore, in the solar cell module support structure of the present invention, the matrix coupling unit may have protrusions that tightly grip the frame members of the solar cell modules that have been engaged with the engagement portions of the matrix coupling unit. Alternatively, the inter-row coupling unit may have protrusions that tightly grip the frame members of the solar cell modules that have been engaged with the engagement portions of the inter-row coupling unit.

With these sort of protrusions, the matrix coupling unit or the inter-row coupling fitting can be electrically conducted to the frame members of the solar cell modules, all solar cell modules arranged in row and column directions can be electrically conducted, and, therefore, the solar cell modules can be arranged so as to be easily grounded.

Moreover, the present invention is directed to a solar cell module support structure for supporting a plurality of solar cell modules arranged in row and column directions, including: a matrix coupling unit in which two engagement portions respectively facing mutually opposite outer directions are formed; an inter-row coupling unit in which two engagement portions respectively facing mutually opposite outer directions are formed; and a fixture unit that is fixed to a base of the solar cell module support structure and that supports the inter-row coupling unit; wherein the matrix coupling unit is disposed between rows of four solar cell modules arranged in two rows and two columns, frame members of two of the solar cell modules arranged in one row are engaged with one of the engagement portions of the matrix coupling unit, and frame members of the other two solar cell modules arranged in the other row are engaged with the other engagement portion of the matrix coupling unit, so that the four solar cell modules are coupled to each other with the matrix coupling unit, and the inter-row coupling unit is disposed between frame members of two solar cell modules arranged in a column, and the frame members of the solar cell modules are respectively engaged with the engagement portions of the inter-row coupling unit, so that the two solar cell modules are coupled to each other with the inter-row coupling unit.

This sort of solar cell module support structure also can achieve actions and effects as described above.

Moreover, the present invention is directed to a method for installing the above-described solar cell module support structure, including the steps of: fixing and supporting frame members of a first solar cell module, which is disposed first, on at least three locations using at least three pairs of said inter-row coupling units and said fixture units; and fixing and supporting frame members of a second or subsequent solar cell module on at least two locations using at least two pairs of said inter-row coupling units and said fixture units, and coupling the frame member of the solar cell module via the matrix coupling unit to the frame members of other already arranged solar cell modules.

When frame members of a first solar cell module, which is disposed first, are fixed and supported on at least three locations in this manner, the first solar cell module can be stably supported. Furthermore, a second solar cell module can be easily coupled via the matrix coupling unit to the first solar cell module, and, therefore, the second solar cell module also can be stably supported with the matrix coupling unit. Third and subsequent solar cell modules also can achieve actions and effects as described above.

Furthermore, the second and subsequent solar cell modules each use only two pairs of the inter-row coupling units and the fixture units, and, therefore, the number of parts can be reduced.

Furthermore, the installation method of the present invention may further include the step of fixing and supporting points near centers of mutually opposing frame members of a solar cell module that is disposed between other solar cell modules on both sides, using two pairs of said inter-row coupling units and said fixture units.

When points near centers of mutually opposing frame members of the solar cell module are fixed and supported in this manner, deformation such as warping of the solar cell module can be effectively suppressed.

Furthermore, the solar photovoltaic system of the present invention uses the above-described solar cell module support structure of the present invention.

This sort of solar photovoltaic system also can achieve actions and effects as in the solar cell module support structure of the present invention.

### Effects of the Invention

According to the present invention, since four solar cell modules arranged in two rows and two columns are coupled to each other with the matrix coupling unit, the solar cell modules arranged in row and column directions can be unitarily supported. Furthermore, since conventional cross-pieces of a chassis and the like are not required, the number of parts can be prevented from increasing more than necessary.

### Brief Description of Drawings

[FIG. 1] FIG. 1 is a perspective view showing a solar photovoltaic system in which a plurality of solar cell modules are arranged using a solar cell module support structure according to an embodiment of the present invention.
[FIG. 2] FIG. 2 is a perspective view showing a solar cell module in the solar photovoltaic system in FIG. 1.
[FIG. 3] FIG. 3 is a perspective view showing a matrix coupling fitting in the solar photovoltaic system in FIG. 1.
[FIGS. 4] FIGS. 4(a), 4(b), and 4(c) are a front view, a side view, and a plan view respectively showing the matrix coupling fitting in FIG. 3.
[FIGS. 5] FIGS. 5(a) and 5(b) are perspective views showing an inter-row coupling fitting in the solar photovoltaic system in FIG. 1 respectively viewed from the front and the rear.
[FIGS. 6] FIGS. 6(a), 6(b), and 6(c) are a front view, a side view, and a plan view respectively showing the inter-row coupling fitting in FIG. 5.
[FIG. 7] FIG. 7 is a perspective view showing a fixture fitting in the solar photovoltaic system in FIG. 1.
[FIGS. 8] FIGS. 8(a), 8(b), and 8(c) are a front view, a side view, and a plan view respectively showing the fixture fitting in FIG. 7.
[FIG. 9] FIG. 9 is a perspective view showing an attachment fitting for attaching the inter-row coupling fitting to the fixture fitting.
[FIG. 10] FIG. 10 is an exploded perspective view showing the structure for fixing the inter-row coupling fitting, the fixture fitting, and the attachment fitting.
[FIG. 11] FIG. 11 is a cross-sectional view showing the structure for fixing the inter-row coupling fitting, the fixture fitting, and the attachment fitting.
[FIG. 12] FIG. 12 is a perspective view showing the structure for coupling frame members of the solar cell modules using the matrix coupling fitting.
[FIG. 13] FIG. 13 is a cross-sectional view showing the coupling structure in FIG. 12.
[FIGS. 14] FIGS. 14(a) to 14(d) are views showing an installation procedure for constructing the solar photovoltaic system in FIG. 1.
[FIG. 15] FIG. 15 is a perspective view showing a modified example of the inter-row coupling fitting.
[FIG. 16] FIG. 16 is a perspective view showing a modified example of the matrix coupling fitting.
[FIG. 17] FIG. 17 is a cross-sectional view showing a modified example of the frame members of the solar cell modules suitable for the inter-row coupling fitting in FIG. 15 or the matrix coupling fitting in FIG. 16.

### Modes for Carrying out the Invention

Hereinafter, an embodiment of the present invention will be described in detail with reference to the appended drawings.

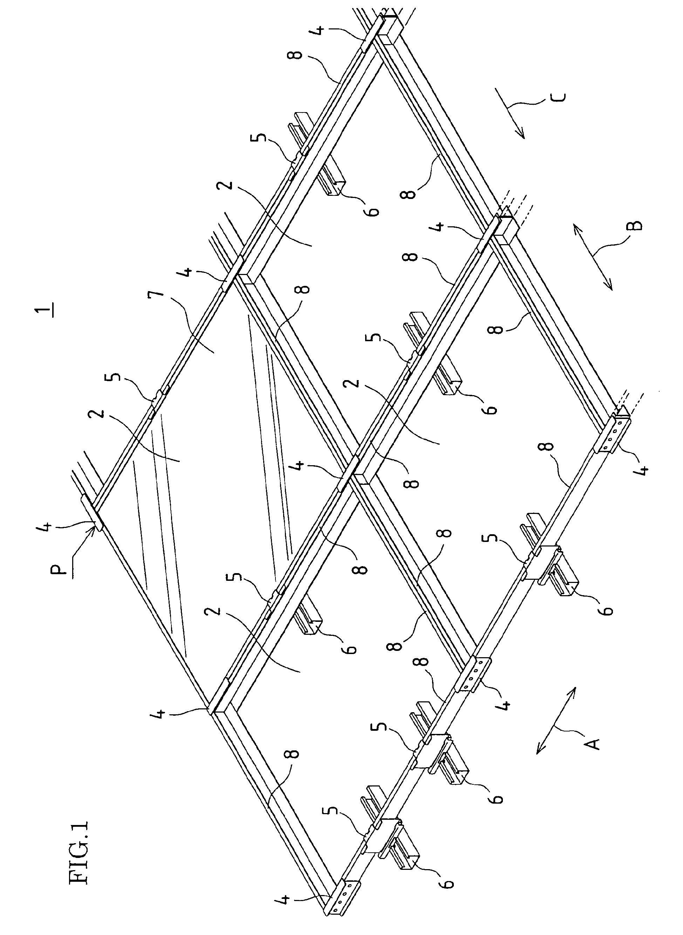

FIG. 1 is a perspective view showing a solar photovoltaic system in which a plurality of solar cell modules are arranged using a solar cell module support structure according to an embodiment of the present invention.

In a solar photovoltaic system 1, a plurality of solar cell modules 2 are arranged in row and column directions A and B and supported on a roof (base). Points near corners of the solar cell modules 2 are coupled and connected to each other with matrix coupling fittings 4, and sides of the solar cell modules 2 arranged in the column direction B are coupled and connected to each other with inter-row coupling fittings 5, and, therefore, the solar cell modules 2 are unitarily supported. The inter-row coupling fittings 5 are connected and fixed respectively via the fixture fittings 6 to the roof, and, therefore, the solar cell modules 2 are supported. The row direction A is a direction orthogonal to a water flow direction C on the roof, and the column direction B is a direction along the water flow direction C.

Any method or structure may be used to fix the fixture fittings 6 to the roof. For example, if the roof is covered by asphalt shingles, the fixture fittings 6 may be screwed via the asphalt shingles into the rafters and the roof lining boards. Alternatively, if the roof is covered by clay roof tiles, holes may be formed through the clay roof tiles, and the fixture fittings 6 may be then screwed via the holes of the clay roof tiles into the rafters and the roof lining boards.

Note that FIG. 1 shows only solar cell panels 7 of one solar cell module 2, and does not show solar cell panels 7 of the other solar cell modules 2, thereby clearly showing the matrix coupling fittings 4, the inter-row coupling fittings 5, and the fixture fittings 6 thereon.

Next, the solar cell modules 2, the matrix coupling fittings 4, the inter-row coupling fittings 5, the fixture fittings 6, and the like will be described.

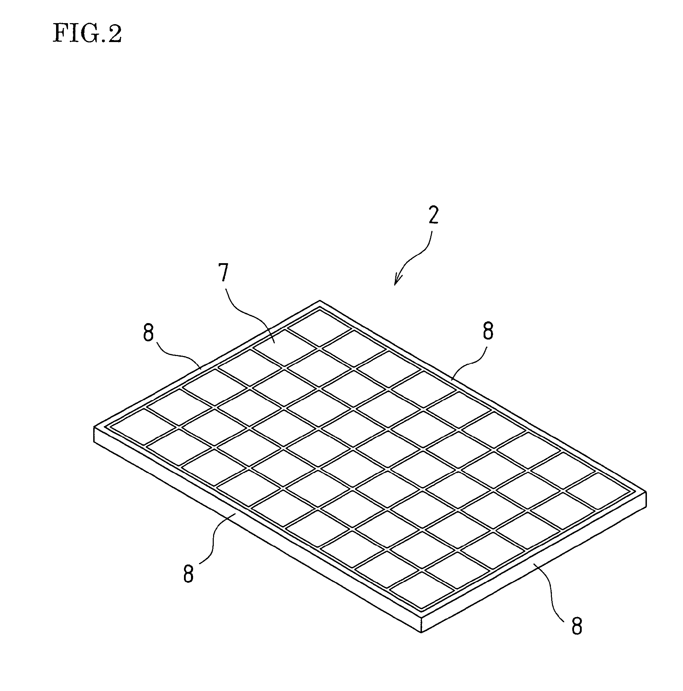

FIG. 2 is a perspective view showing the solar cell module 2. As shown in FIG. 2, the solar cell module 2 is configured by the solar cell panels 7 that convert solar light into electricity and the frame members 8 that frame and hold the solar cell panels 7. The frame members 8 are made of aluminum, and are used to ensure the strength of the solar cell module 2 itself and to protect the solar cell panels 7.

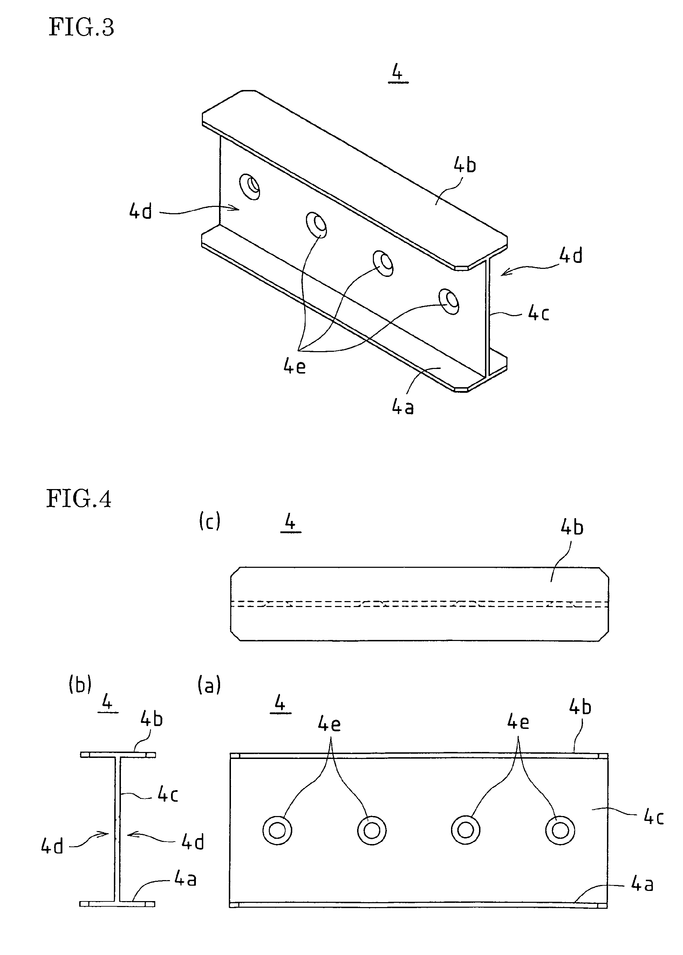

FIG. 3 is a perspective view showing the matrix coupling fitting 4. Furthermore, FIGS. 4(a), 4(b), and 4(c) are a side view, a plan view, and a front view showing the matrix coupling fitting 4.

As shown in FIGS. 3 and 4, the matrix coupling fitting 4 has a bottom plate 4a, a top plate 4b, and an upright plate 4c that connects the bottom plate 4a and the top plate 4b. The upright plate 4c is connected on a virtual center line of the bottom plate 4a and divides the bottom plate 4a into two portions, and is connected on a virtual center line of the top plate 4b and divides the top plate 4b into two portions. Engagement recess portions 4d defined by the bottom plate 4a, the top plate 4b, and the upright plate 4c are respectively formed on both sides of the matrix coupling fitting 4, and the engagement recess portions 4d respectively face mutually opposite outer directions. Furthermore, four through holes 4e are formed through the upright plate 4c.

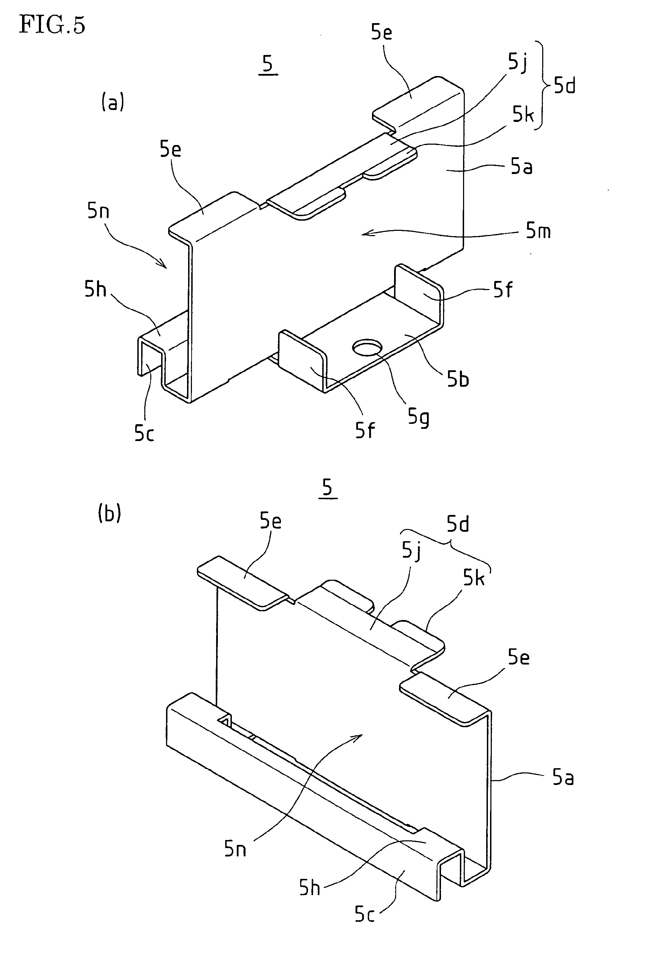

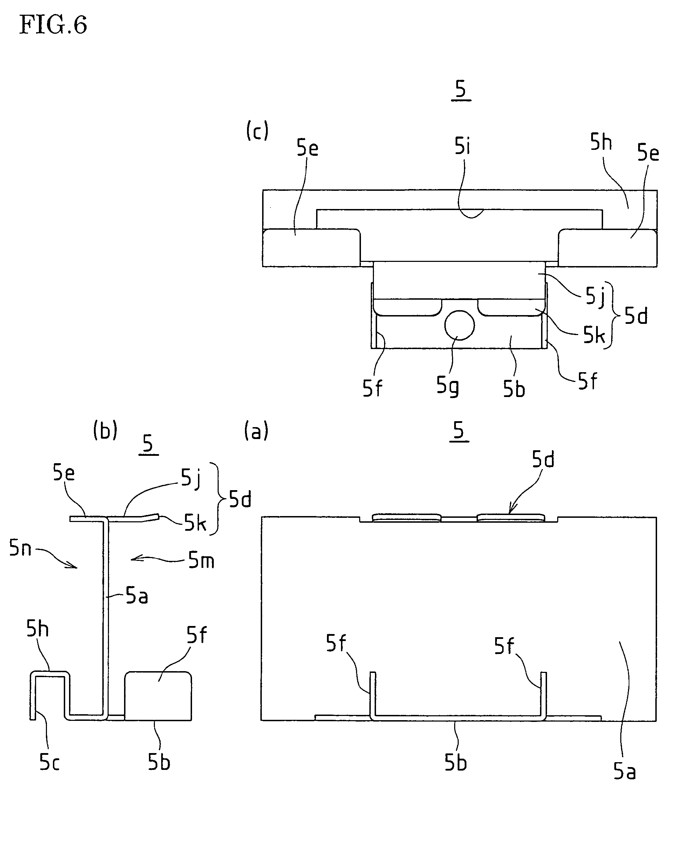

FIG. 5 shows perspective views of the inter-row coupling fitting 5. Furthermore, FIGS. 6(a), 6(b), and 6(c) are a side view, a plan view, and a front view showing the inter-row coupling fitting 5.

As shown in FIGS. 5 and 6, the inter-row coupling fitting 5 has an upright plate 5a, a bottom plate 5b that is bent to one side on the lower side of the upright plate 5a, a base plate 5c that is bent to the other side on the lower side of the upright plate 5a, a first catch portion 5d that is bent to one side (the same side as the bottom plate 5b) on the upper side of the upright plate 5a, and two second catch portions 5e that are bent to the other side (the same side as the base plate 5c) on the upper side of the upright plate 5a.

The bottom plate 5b has mounting portions 5f that are formed by bending both sides of the bottom plate 5b in the perpendicular direction. Furthermore, a through hole 5g is formed through the bottom plate 5b. The mounting portions 5f are spaced away from the upright plate 5a.

The base plate 5c is bent three times (sequentially bent upward, outward, and then downward), forming into a pedestal portion 5h. The pedestal portion 5h is spaced away from the upright plate 5a. The base plate 5c has an opening portion 5i that is formed by cutting and separating the bottom plate 5b and the mounting portions 5f.

The first catch portion 5d is positioned at the center between the two second catch portions 5e. The first catch portion 5d has a pressing portion 5j that is bent at a right angle with respect to the upright plate 5a and introducing portions 5k that are formed by bending the front end side of the pressing portion 5j obliquely upward. Furthermore, the second catch portions 5e are bent at a right angle with respect to the upright plate 5a.

On such an inter-row coupling fitting 5, an engagement portion 5m configured by the first catch portion 5d and the mounting portions 5f is formed on one side, and an engagement portion 5n configured by the second catch portions 5e and the pedestal portion 5h is formed on the other side. The engagement portions 5m and 5n respectively face mutually opposite outer directions.

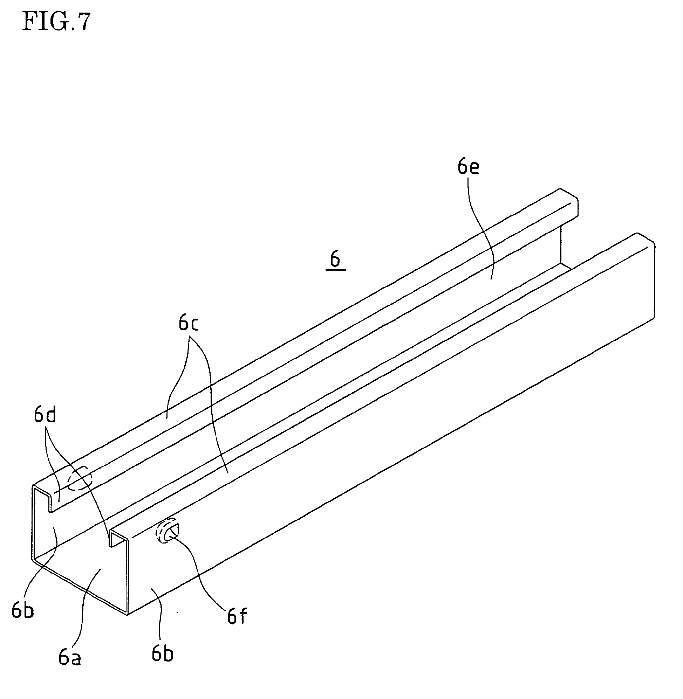

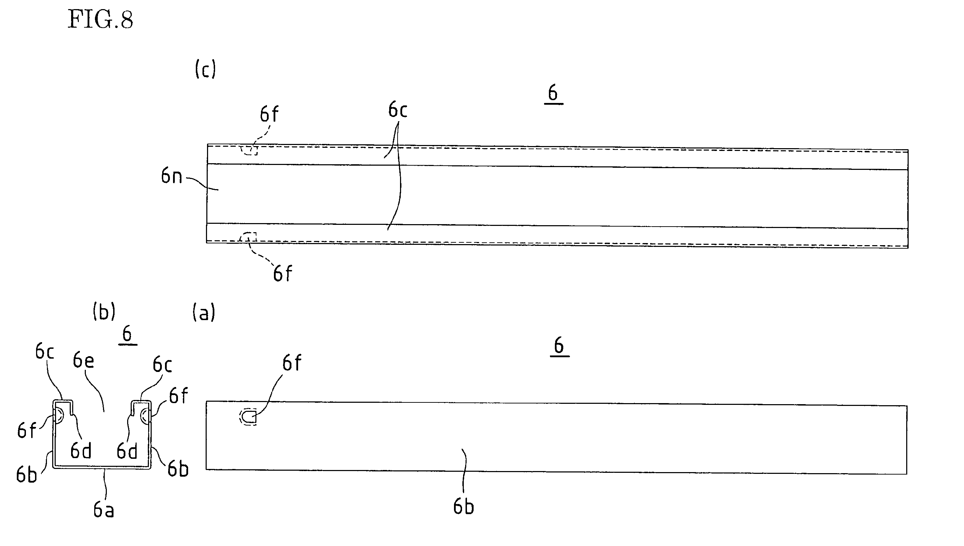

FIG. 7 is a perspective view showing the fixture fitting 6. Furthermore, FIGS. 8(a), 8(b), and 8(c) are a side view, a plan view, and a front view showing the fixture fitting 6.

As shown in FIGS. 7 and 8, the fixture fitting 6 has a rectangular main plate 6a, side walls 6b that are bent upward on both sides of the main plate 6a, top plates 6c that are bent inward on the upper sides of the side walls 6b, and guide walls 6d that are bent downward at the inner sides of the top plates 6c. A space is formed between the guide walls 6d, forming into a slot 6e. Furthermore, stoppers 6f are respectively formed near end portions on one side of the side plates 6b.

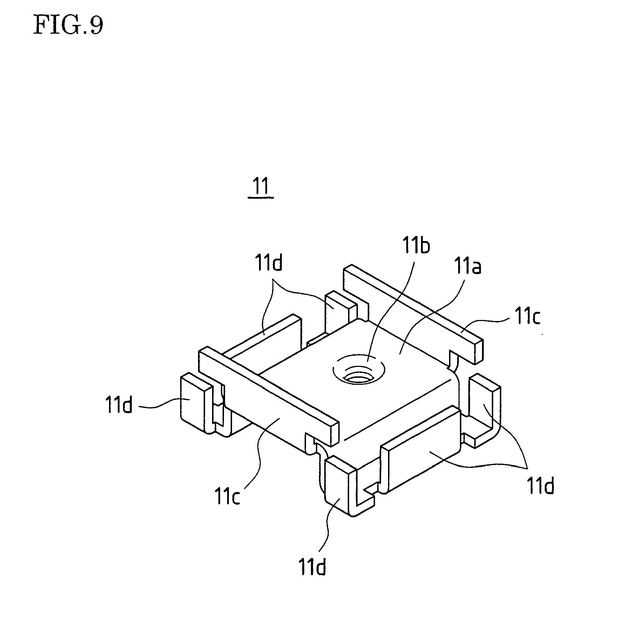

FIG. 9 is a perspective view showing an attachment fitting 11 for attaching the inter-row coupling fitting 5 to the fixture fitting 6. As shown in FIG. 9, the attachment fitting 11 has a screw hole 11b that is formed through a main plate 11a, T-shaped support pieces 11c that are formed by bending both sides of the main plate 11a upward, and slide portions 11d that are formed by bending both sides of the main plate 11a three times (sequentially bent downward, outward, and then upward).

All of the matrix coupling fitting 4, the inter-row coupling fitting 5, the fixture fitting 6, and the attachment fitting 11 are formed, for example, through processing in which a steel plate is punched, cut, bent, and plated. Note that the matrix coupling fitting 4 may be formed by punching an aluminum plate.

As described above, the fixture fitting 6 is fixed to the roof using an appropriate method or structure. At that time, the orientation of the fixture fitting 6 is set such that the slot 6e of the fixture fitting 6 is along the water flow direction C in FIG. 1 and such that the stoppers 6f of the fixture fitting 6 are positioned on the downstream side in the water flow direction. The attachment fitting 11 is attached to the fixture fitting 6, and the matrix coupling fitting 4 is then fixed to the fixture fitting 6.

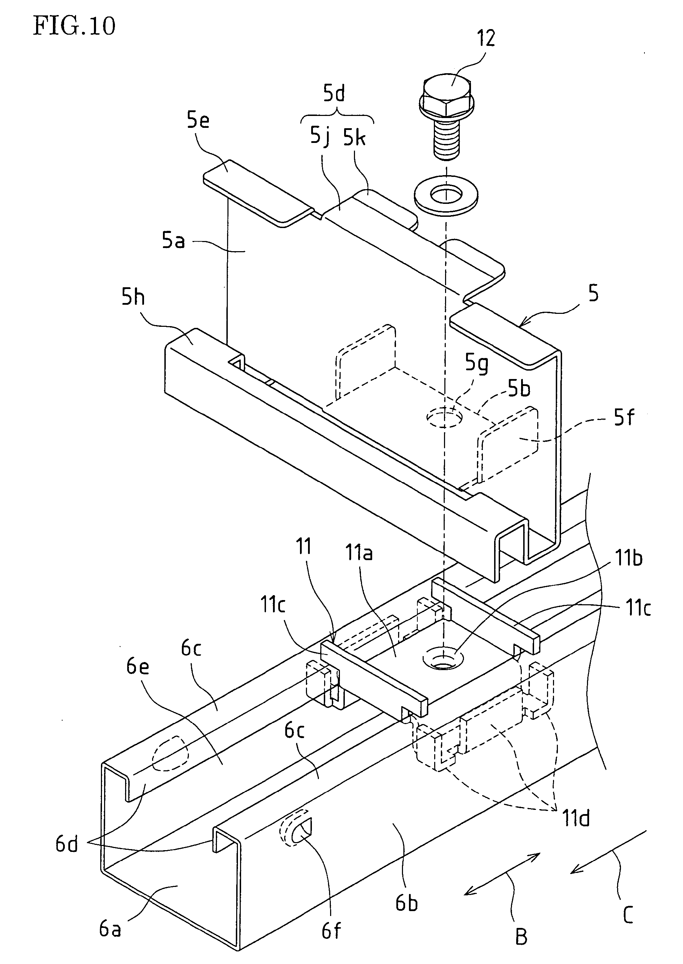

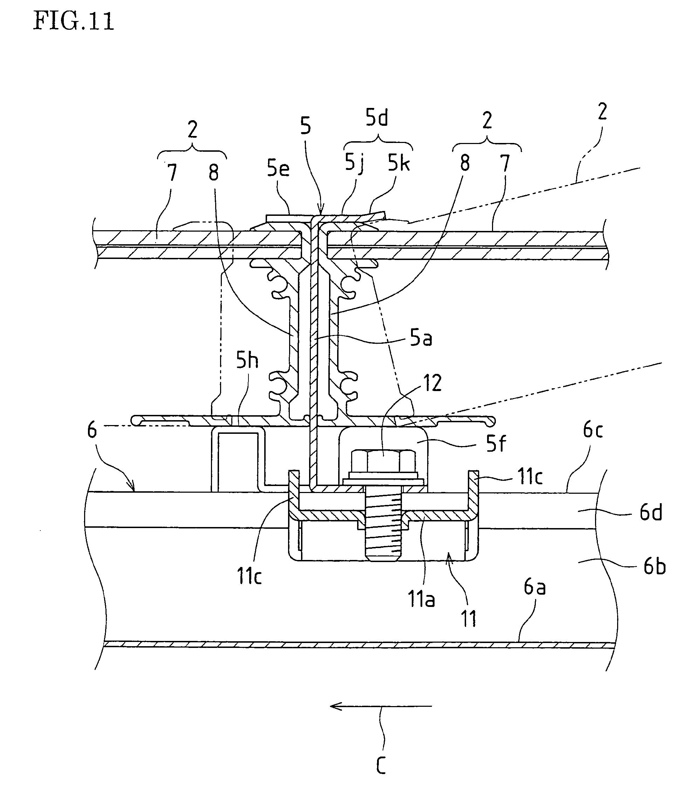

FIG. 10 is an exploded perspective view showing the structure for fixing the matrix coupling fitting 4, the fixture fitting 6, and the attachment fitting 11. Furthermore, FIG. 11 is a cross-sectional view showing the structure for fixing the matrix coupling fitting 4, the fixture fitting 6, and the attachment fitting 11.

As shown in FIG. 10, the support pieces 11c of the attachment fitting 11 are inserted into the slot 6e of the fixture fitting 6, the head portions of the T-shaped support pieces 11c are caught on the top plates 6c, each of the slide portions 11d of the attachment fitting 11 is inserted between the side wall 6b and the guide wall 6d on both sides of the fixture fitting 6, and, therefore, the attachment fitting 11 is attached to the fixture fitting 6. Accordingly, the attachment fitting 11 is supported in a movable manner along the slot 6e of the fixture fitting 6. Furthermore, the stoppers 6f of the fixture fitting 6 prevent the attachment fitting 11 from being detached to the downstream side in the water flow direction.

Subsequently, as shown in FIG. 11, the bottom plate 5b of the inter-row coupling fitting 5 is sandwiched between the head portions of the support pieces 11c of the attachment fitting 11 projected from the top plates 6c of the fixture fitting 6, the bottom plate 5b of the inter-row coupling fitting 5 is placed on the top plates 6c of the fixture fitting 6, the through hole 5g of the bottom plate 5b of the inter-row coupling fitting 5 is matched to the screw hole 11b of the main plate 11a of the attachment fitting 11, a bolt 12 is inserted via the through hole 5g of the inter-row coupling fitting 5 into the screw hole 11b of the attachment fitting 11, and, therefore, the inter-row coupling fitting 5 is temporarily fixed to the fixture fitting 6. In this temporarily fixed state, the inter-row coupling fitting 5 is moved in the column direction B and positioned, after which the bolt 12 is tightened and the inter-row coupling fitting 5 is fixed to the fixture fitting 6.

For example, in order to arrange the solar cell modules 2 in 1st row (a row on the most downstream side in the water flow direction C) in a straight line as shown in FIG. 1, the inter-row coupling fittings 5 on the most downstream side are each moved as appropriate in the column direction B, and the inter-row coupling fittings 5 are positioned along the straight line in the row direction A, after which the bolts 12 are tightened and the inter-row coupling fittings 5 are fixed to the fixture fittings 6.

The thus fixed inter-row coupling fittings 5 couple and connect sides of the solar cell modules 2 arranged in the column direction B to each other.

The inter-row coupling fitting 5 is sandwiched between the solar cell modules 2 arranged in the column direction B as shown in FIG. 11, or is in contact with a side of the solar cell module 2 in 1st row (a side on the downstream side in the water flow direction).

Of the solar cell modules 2 on both sides of the inter-row coupling fitting 5, the solar cell module 2 on the upstream side in the water flow direction (and in 1st row) is set such that the frame member 8 is placed on the mounting portions 5f of the inter-row coupling fitting 5. Then, the frame member 8 is pushed into a space below the pressing portion 5j of the first catch portion 5d of the inter-row coupling fitting 5, the upper face of the frame member 8 is pressed by the pressing portion 5j of the first catch portion 5d, and, therefore, the frame member 8 is sandwiched and fixed between the mounting portions 5f and the pressing portion 5j of the first catch portion 5d in the inter-row coupling fitting 5. Furthermore, the end face of the frame member 8 is in contact with the upright plate 5a of the inter-row coupling fitting 5. That is to say, the frame member 8 of the solar cell module 2 on the upstream side in the water flow direction (and in 1st row) is engaged with the engagement portion 5m of the inter-row coupling fitting 5 (see FIGS. 5(a), 5(b), and 6(b)).

For example, the solar cell module 2 is inclined as indicated by the dashed double dotted line, the frame member 8 is placed and slid on the mounting portions 5f of the inter-row coupling fitting 5, the lower corners of the frame member 8 are moved into a space between the mounting portions 5f and the upright plate 5a of the inter-row coupling fitting 5, the frame member 8 is inserted from the introducing portions 5k of the first catch portion 5d and pushed into a space below the pressing portion 5j, and, then, the solar cell module 2 is horizontally lowered. Accordingly, the frame member 8 is sandwiched and fixed between the mounting portions 5f and the pressing portion 5j of the first catch portion 5d, and the end face of the frame member 8 is in contact with the upright plate 5a.

Since the introducing portions 5k bent obliquely upward are formed on the front end side of the first catch portion 5d, the frame member 8 of the inclined solar cell module 2 can be easily placed blow the introducing portions 5k of the first catch portion 5d, and, then, the frame member 8 can be easily inserted from the introducing portions 6k of the first catch portion 5d and pushed into a space below the pressing portion 5j.

Furthermore, since the mounting portions 5f and the upright plate 5a of the inter-row coupling fitting 5 are spaced away from each other, a space is provided below the first catch portion 5d, and, therefore, when the frame member 8 is placed and slid on the mounting portions 5f of the inter-row coupling fitting 5, the lower corners of the frame member 8 of the inclined solar cell module 2 fall between the mounting portions 5f and the upright plate 5a, and the upper face of the frame member 8 can be easily pushed into a space below the pressing portion 5j of the first catch portion 5d.

Note that the solar cell module 2 may not be inclined as indicated by the dashed double dotted line, and the frame member 8 of the solar cell module 2 may be pushed into a space below the pressing portion 5j of the first catch portion 5d of the inter-row coupling fitting 5 while the frame member 8 is placed and horizontally supported on the mounting portions 5f of the inter-row coupling fitting 5.

Furthermore, as shown in FIG. 11, of the solar cell module 2 on both sides of the inter-row coupling fitting 5, the solar cell module 2 on the downstream side in the water flow direction is set such that the frame member 8 is placed on the pedestal portion 5h of the inter-row coupling fitting 5. Then, the frame member 8 is pushed into a space below the second catch portions 5e of the inter-row coupling fitting 5, the upper face of the frame member 8 is pressed by the second catch portions 5e, and, therefore, the frame member 8 is sandwiched and fixed between the pedestal portion 5h and the second catch portions 5e in the inter-row coupling fitting 5. Furthermore, the end face of the frame member 8 is in contact with the upright plate 5a of the inter-row coupling fitting 5. That is to say, the frame member 8 of the solar cell module 2 on the downstream side in the water flow direction is engaged with the engagement portion 5n of the inter-row coupling fitting 5 (see FIGS. 5(a), 5(b), and 6(b)).

For example, the frame member 8 of the solar cell module 2 is placed on the pedestal portion 5h of the inter-row coupling fitting 5 as indicated by the dashed double dotted line, the inter-row coupling fitting 5 is horizontally moved toward the frame member 8 of the solar cell module 2, and, then, the frame member 8 is inserted and pushed into a space between the pedestal portion 5h and the second catch portions 5e in the inter-row coupling fitting 5. Accordingly, the frame member 8 is sandwiched and fixed between the pedestal portion 5h and the second catch portions 5e, and the end face of the frame member 8 is in contact with the upright plate 5a.

Accordingly, the frame member 8 of the solar cell module 2 on the upstream side in the water flow direction is engaged with the engagement portion 5m on one side of the inter-row coupling fitting 5, and the frame member 8 of the solar cell module 2 on the downstream side in the water flow direction is engaged with the engagement portion 5n on the other side of the inter-row coupling fitting 5, and, therefore, the frame members 8 of the solar cell modules 2 arranged in the column direction B are coupled and connected to each other via the inter-row coupling fitting 5.

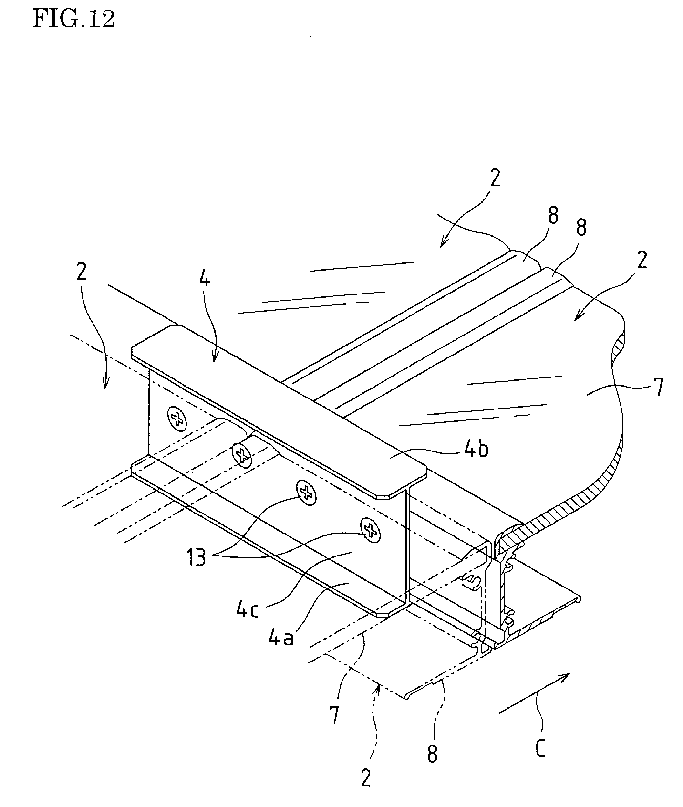

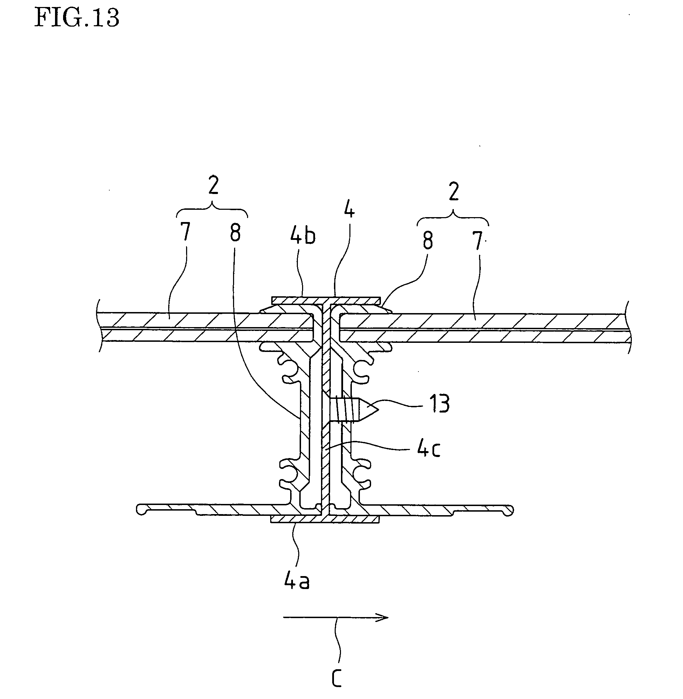

Next, the matrix coupling fitting 4 is used to couple and connect points near the corners of the solar cell modules 2. FIG. 12 is a perspective view showing the structure for coupling the frame members 8 of the solar cell modules 2 using the matrix coupling fitting 4. Furthermore, FIG. 13 is a cross-sectional view showing the coupling structure.

As shown in FIGS. 12 and 13, of the solar cell modules 2 on both sides of the matrix coupling fitting 4, the solar cell module 2 on the downstream side in the water flow direction (and in 1st row) is set such that the frame member 8 is fitted to the engagement recess portion 4d on one side of the matrix coupling fitting 4 (see FIGS. 3 and 4(b)), and is sandwiched between the bottom plate 4a and the top plate 4b in the matrix coupling fitting 4. Furthermore, the end portions of the frame members 8 of two solar cell modules 2 arranged in the row direction A are both fitted to the engagement recess portion 4d on one side of the matrix coupling fitting 4. Then, two screws 13 are screwed via the through holes 4e of the matrix coupling fitting 4 into each of the frame members 8 of two solar cell modules 2, and, therefore, the matrix coupling fitting 4 is fixed to the frame members 8 of the two solar cell modules 2. That is to say, the frame members 8 of two solar cell modules 2 arranged in the row direction A on the downstream side in the water flow direction (and in 1st row) are engaged with and screwed into the engagement recess portion 4d on one side of the matrix coupling fitting 4.

Furthermore, of the solar cell modules 2 on both sides of the matrix coupling fitting 4, the solar cell module 2 on the upstream side in the water flow direction is set such that the frame member 8 is fitted to the engagement recess portion 4d on the other side of the matrix coupling fitting 4, and is sandwiched between the bottom plate 4a and the top plate 4b in the matrix coupling fitting 4. Furthermore, the end portions of the frame members 8 of two solar cell modules 2 arranged in the row direction A are both fitted to the engagement recess portion 4d on the other side of the matrix coupling fitting 4. That is to say, the frame members 8 of two solar cell modules 2 arranged in the row direction A on the upstream side in the water flow direction are engaged with the engagement recess portion 4d on one side of the matrix coupling fitting 4.

Accordingly, the frame members 8 of two solar cell modules 2 arranged in the row direction A on the downstream side in the water flow direction (and in 1st row) are engaged with and screwed into the engagement recess portion 4d on one side of the matrix coupling fitting 4, and the frame members 8 of two solar cell modules 2 arranged in the row direction A on the upstream side in the water flow direction are engaged with the engagement recess portion 4d on the other side of the matrix coupling fitting 4, and, therefore, four solar cell modules 2 arranged in two rows and two columns are coupled and connected to each other via the matrix coupling unit 4.

Here, as shown in FIG. 1, at any location where the corner portions of four solar cell modules 2 are gathered, points near the corner portions of the four solar cell modules 2 are coupled and connected to each other with the matrix coupling fitting 4, and, at any location where the sides of the solar cell modules 2 arranged in the column direction B are adjacent to each other, the sides of the solar cell modules 2 are coupled and connected to each other with the inter-row coupling fitting 5, and, therefore, all the solar cell modules 2 arranged in the row and column directions can be unitarily and firmly supported. Furthermore, since the inter-row coupling fittings 5 are connected and fixed respectively via the fixture fittings 6 to the roof, the solar cell modules 2 can be supported on the roof.

Next, an installation procedure for attaching the solar cell modules 2 to the roof using the solar cell module support structure of this embodiment will be described.

First, as shown in FIG. 1, a plurality of fixture fittings 6 are fixed to the roof. The fixture fittings 6 are respectively arranged at positions where the fixture fittings 6 intersect with the frame members 8 in the row direction A of the solar cell modules 2 arranged later in the row and column directions.

At that time, for a first solar cell module 2, which is disposed first, the fixture fittings 6 are respectively fixed and arranged at three or more locations that intersect with two mutually opposing frame members 8 in the row direction A. In this example, it is assumed that the solar cell module 2 at 1st row and 1st column is disposed first.

Furthermore, for each of solar cell modules 2 that are arranged second and thereafter, the fixture fittings 6 are respectively fixed and arranged at locations (two locations) that intersect with two mutually opposing frame members 8 in the row direction A at points near their centers.

Furthermore, the orientation of the fixture fittings 6 is set such that the slots 6e of the fixture fittings 6 are in the column direction B in FIG. 1. Any method or structure may be used to fix the fixture fittings 6 to the roof.

Subsequently, the attachment fittings 11 are respectively attached to the fixture fittings 6, the inter-row coupling fittings 5 are respectively placed on the fixture fittings 6, the bolts 12 are respectively inserted via the through holes 5g of the inter-row coupling fittings 5 into the screw holes 11b of the attachment fittings 11, and, therefore, the inter-row coupling fittings 5 are respectively temporarily fixed to the fixture fittings 6.

Then, the inter-row coupling fittings 5 on the most downstream side in the water flow direction C are each moved as appropriate in the column direction B, and the inter-row coupling fittings 5 are positioned along the straight line in the row direction A, after which the bolts 12 are tightened and the inter-row coupling fittings 5 are fixed to the fixture fittings 6.

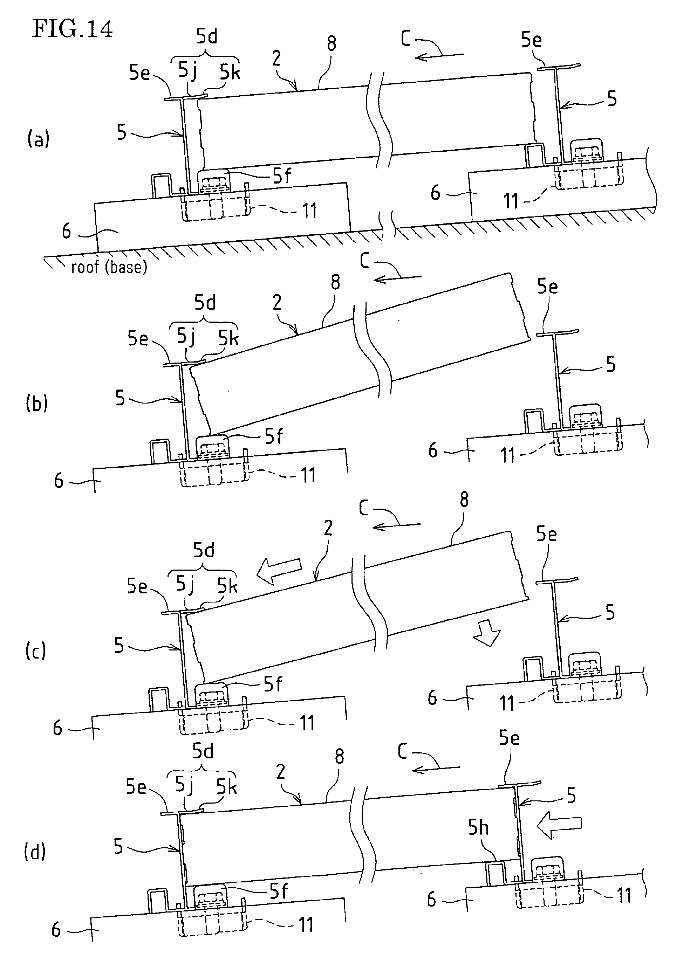

Next, the first solar cell module 2 is disposed at the position of 1st row and 1st column. Then, as shown in FIG. 14(a), the frame member 8 of the solar cell module 2 is placed on the mounting portions 5f of the inter-row coupling fitting 5 on the most downstream side in the water flow direction C and the pedestal portion 5h of the inter-row coupling fitting 5 second from the most downstream side. At that time, the inter-row coupling fitting 5 second from the most downstream side may be moved in the column direction B on the fixture fitting 6, thereby adjusting the position of the inter-row coupling fitting 5.

Furthermore, as shown in FIG. 14(b), the side on the upstream side in the water flow direction of the solar cell module 2 is lifted. As shown in FIG. 14(c), the frame member 8 of the solar cell module 2 is slid, and is inserted from the introducing portions 5k of the first catch portion 5d and pushed into a space below the pressing portion 5j in the inter-row coupling fitting 5.

Subsequently, as shown in FIG. 14(d), the side on the upstream side in the water flow direction of the solar cell module 2 is lowered, and the side on the upstream side in the water flow direction of the solar cell module 2 is placed on the pedestal portion 5h of the inter-row coupling fitting 5 second from the most downstream side. At that time, the frame member 8 on the downstream side in the water flow direction of the solar cell module 2 is engaged with the engagement portion 5m of the inter-row coupling fitting 5 (see FIGS. 5(a), 5(b), and 6(b)).

Then, the inter-row coupling fitting 5 second from the most downstream side is moved in the water flow direction C on the fixture fitting 6, and the frame member 8 on the upstream side in the water flow direction of the solar cell module 2 is inserted and pushed into a space between the pedestal portion 5h and the second catch portions 5e in the inter-row coupling fitting 5. Accordingly, the frame member 8 on the upstream side in the water flow direction of the solar cell module 2 is engaged with the engagement portion 5n of the inter-row coupling fitting 5 (see FIGS. 5(a), 5(b), and 6(b)). Furthermore, the bolt 12 on the inter-row coupling fitting 5 second from the most downstream side is tightened, and the inter-row coupling fitting 5 is fixed.

As described above, for the solar cell module 2 at 1st row and 1st column, the fixture fittings 6 are respectively fixed and arranged at three or more locations that intersect with two mutually opposing frame members 8 in the row direction A, and, therefore, the frame members 8 of the solar cell module 2 are respectively engaged with the inter-row coupling fittings 5 at these locations. Accordingly, the solar cell module 2 at 1st row and 1st column is stably supported without wobbling.

Note that, for the solar cell module 2 at 1st row and 1st column, one of three or more fixture fittings 6 may be replaced by a temporarily fixing spacer, so that the solar cell module 2 is stably supported without wobbling, and, after the solar cell modules 2 at 1st row and 1st and 2nd columns are coupled to each other via the matrix coupling fitting 4 as described below, the temporarily fixing spacer may be detached.

Next, a second solar cell module 2 is disposed at the position of 1st row and 2nd column, and this solar cell module 2 is engaged with the inter-row coupling fittings 5 in a procedure as in FIGS. 14(a) to 14(d).

Furthermore, the frame members 8 on the downstream side in the water flow direction of the solar cell modules 2 at 1st row and 1st and 2nd columns are both fitted and screwed into the engagement recess portion 4d of one matrix coupling fitting 4, and the frame members 8 on the upstream side in the water flow direction of the solar cell modules 2 are both fitted and screwed into the engagement recess portion 4d of another matrix coupling fitting 4, and, therefore, the solar cell modules 2 are coupled to each other via two matrix coupling fittings 4.

For each of the solar cell modules 2 that are arranged second and thereafter, the fixture fittings 6 are respectively fixed and arranged at locations (two locations) that intersect with two mutually opposing frame members 8 in the row direction A at points near their centers, and, therefore, the frame members 8 of the solar cell module 2 are engaged with the inter-row coupling fittings 5 at the two locations. Accordingly, the solar cell modules 2 wobble. However, since the solar cell module 2 at 1st row and 1st column is stably supported without wobbling, when the frame members 8 of the solar cell modules 2 at 1st row and 1st and 2nd columns are coupled and connected to each other with the matrix coupling fittings 4, the solar cell module 2 in 2nd column is also stably supported without wobbling. Furthermore, since the solar cell module 2 at 1st row and 1st column is stably supported without wobbling, the matrix coupling fittings 4 are easily attached.

If the solar cell module 2 at 1st row and 1st column wobbles, it is difficult to cause the frame members 8 of the solar cell modules 2 at 1st row and 1st and 2nd columns to be engaged with the matrix coupling fittings 4.

Next, the solar cell modules 2 at 1st row and 3rd and subsequent columns are also each engaged with the inter-row coupling fittings 5 in a procedure as in FIGS. 14(a) to 14(d). Furthermore, the frame members 8 on the downstream side in the water flow direction of the solar cell modules 2 adjacent to each other are both fitted and screwed into the engagement recess portion 4d of one matrix coupling fitting 4, and the frame members 8 on the upstream side in the water flow direction of the solar cell modules 2 adjacent to each other are both fitted and screwed into the engagement recess portion 4d of another matrix coupling fitting 4, and, therefore, the solar cell modules 2 adjacent to each other are coupled to each other via two matrix coupling fittings 4.

Furthermore, also regarding the solar cell modules 2 at 1st row and 3rd and subsequent columns, since the solar cell module 2 in the previous column is stably supported without wobbling, the frame members 8 of the solar cell modules 2 adjacent to each other can be easily both engaged with the matrix coupling fittings 4, and all the solar cell modules 2 in 1st row are stably supported without wobbling.

Next, the solar cell modules 2 in 2nd row are also each engaged with the inter-row coupling fittings 5 in a procedure as in FIGS. 14(a) to 14(d). Alternatively, the solar cell module 2 is not inclined, and the frame member 8 of the solar cell module 2 is pushed into a space below the pressing portion 5j of the first catch portion 5d of the inter-row coupling fitting 5 while the frame member 8 is placed and horizontally supported on the mounting portions 5f of the inter-row coupling fitting 5, thereby causing the frame member 8 to be engaged with the inter-row coupling fitting 5. At the same time, the frame members 8 of the solar cell modules 2 adjacent to each other are both engaged with the matrix coupling fittings 4.

At that time, the frame members 8 on the downstream side in the water flow direction of the solar cell modules 2 adjacent to each other are engaged with the matrix coupling fittings 4 that have been screwed into the frame members 8 on the upstream side in the water flow direction of the solar cell modules 2 in 1st row. Accordingly, the matrix coupling fittings 4 are not screwed into the frame members 8 on the downstream side in the water flow direction of the solar cell modules 2 in 2nd row. Furthermore, the matrix coupling fittings 4 are screwed into the frame members 8 on the upstream side in the water flow direction of the solar cell modules 2 in 2nd row.

Next, the solar cell modules 2 in 3rd and subsequent rows are also each engaged with the inter-row coupling fittings 5 and the matrix coupling fittings 4 in a similar procedure.

Note that, as shown in FIG. 1, the matrix coupling fittings 4 at both ends in each row are arranged so as not to protrude from the solar cell modules 2.

In this manner, a solar photovoltaic system using the solar cell module support structure of this embodiment is constructed. In this solar photovoltaic system, the matrix coupling fittings 4 and the inter-row coupling fittings 5 are sandwiched between the frame members 8 of the solar cell modules 2.

The frame member 8 on the upstream side in the water flow direction of the solar cell module 2 in the previous row and the frame member 8 on the downstream side in the water flow direction of the solar cell module 2 in the next row are respectively engaged with the engagement portions 5m and 5n of the inter-row coupling fitting 5. Accordingly, the frame members 8 of two solar cell modules 2 arranged in the column direction B are coupled and connected to each other with the inter-row coupling fitting 5.

Furthermore, the frame members 8 on the upstream side in the water flow direction of two solar cell modules 2 arranged in the previous row and the frame members 8 on the downstream side in the water flow direction two solar cell modules 2 arranged in the next row are respectively engaged with the engagement recess portions 4d of the matrix coupling fitting 4. Accordingly, the frame members 8 of four solar cell modules 2 arranged in two rows and two columns are coupled and connected to each other with the matrix coupling fitting 4.

Such coupling with the matrix coupling fitting 4 and the inter-row coupling fitting 5 is provided at any position between the solar cell modules 2, and the solar cell modules 2 of the entire solar photovoltaic system are unitarily supported. Then, the inter-row coupling fittings 5 are respectively fixed via the fixture fittings 6 to the roof. Furthermore, according to this sort of configuration, since conventional cross-pieces of chassis and the like are not required, the number of parts can be prevented from increasing more than necessary, and an unnecessary space that does not contribute to solar photovoltaic power generation can be constrained to the fullest extent possible.

Furthermore, it is not that a plurality of solar cell modules 2 are fixed one by one to the roof, but merely that a plurality of solar cell modules 2 are integrated and the solar cell modules 2 excluding the first solar cell module are each fixed at two locations, and, therefore, the operation efficiency is high.

Furthermore, since the solar cell modules 2 excluding the first solar cell module are each fixed at two locations that are near the centers of two mutually opposing frame members 8 in the row direction A, deformation such as warping of the solar cell modules 2 can be effectively suppressed, and the load of the solar cell modules 2 can be supported in a well-balanced manner.

Furthermore, since two screws 13 are screwed via the through holes 4e of the matrix coupling fitting 4 into each of the frame members 8 of two solar cell modules 2, and the matrix coupling fitting 4 is fixed to the frame members 8 of the two solar cell modules 2, the frame members 8 of the two solar cell modules 2 are electrically connected to each other via the matrix coupling fitting 4. Thus, the frame members 8 of the solar cell modules 2 in one row are electrically conducted to each other. Accordingly, the solar cell modules 2 are easily grounded.

Furthermore, if the matrix coupling fitting 4 disposed at an end of a row is engaged with and screwed into the outer sides of two solar cell modules 2 arranged in the column direction B as shown in a location P in FIG. 1, the frame members 8 of the solar cell modules 2 in two rows are electrically conducted to each other, and all the frame members 8 of the solar cell modules 2 arranged in the row and column directions A and B are electrically conducted to each other. Accordingly, the solar cell modules 2 are more easily grounded.

Next, modified examples of the matrix coupling fitting 4 and the inter-row coupling fitting 5 will be described.

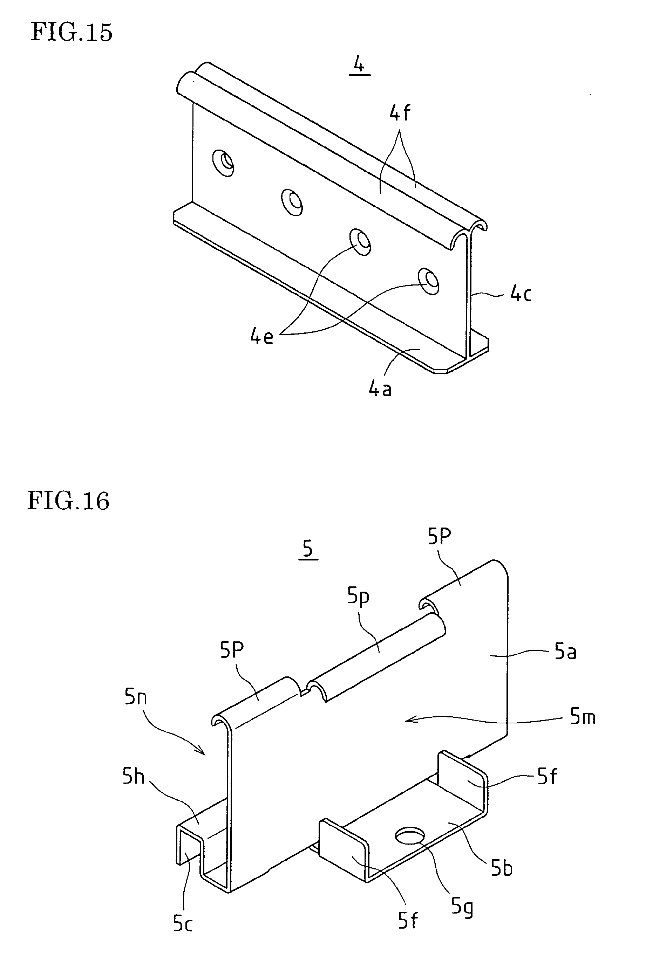

FIG. 15 is a perspective view showing a modified example of the matrix coupling fitting 4. In this modified example, hook-like protruding portions 4f projected from both sides of the upright plate 4c and curved downward are arranged on the upper side of the upright plate 4c of the matrix coupling fitting 4, where, on both sides of the upright plate 4c, the frame member 8 of the solar cell module 2 is sandwiched between the bottom plate 4a and the hook-like protruding portion 4f, and the frame member 8 of the solar cell module 2 is tightly gripped by the front end of the hook-like protruding portion 4f, thereby establishing electrical conduction.

Alternatively, as shown in FIG. 16, hook-like protruding portions 5p projected from both sides of the upright plate 5a and curved downward may be arranged on the upper side of the upright plate 5a of the inter-row coupling fitting 5, where, on one side of the upright plate 5a, the frame member 8 of the solar cell module 2 is sandwiched between the mounting portions 5f and the hook-like protruding portion 5p, and the frame member 8 of the solar cell module 2 is tightly gripped by the front end of the hook-like protruding portion 5p, thereby establishing electrical conduction, and, on the other side of the upright plate 5a, the frame member 8 of the solar cell module 2 is sandwiched between the pedestal portion 5h and the hook-like protruding portions 5p, and the frame member 8 of the solar cell module 2 is tightly gripped by the front ends of the hook-like protruding portions 5p, thereby establishing electrical conduction.

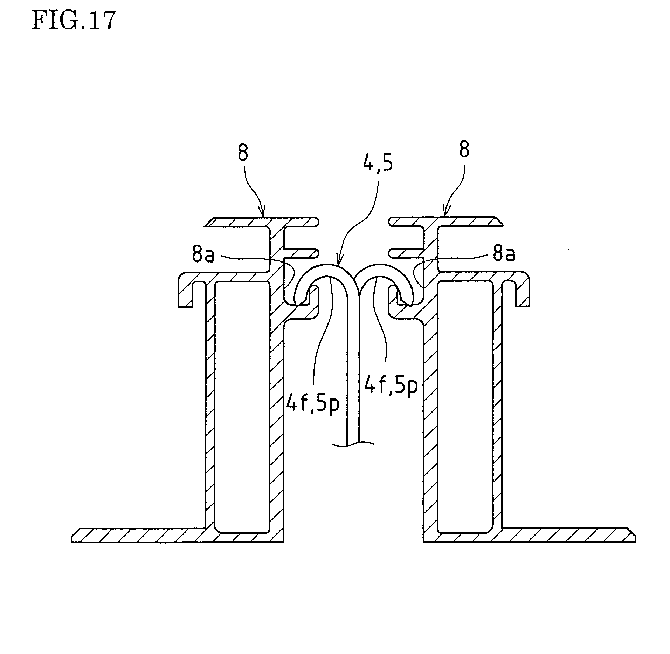

Furthermore, frame members 8 each having a cross-section as shown in FIG. 17 may be applied to the solar cell modules 2, where the hook-like protruding portions 4f of the matrix coupling fitting 4 or the hook-like protruding portions 5p of the inter-row coupling fitting 5 are caught on and tightly grip fitting grooves 8a of the frame members 8.

When the matrix coupling fittings 4 and the inter-row coupling fittings 5 as shown in FIGS. 15 and 16 are used, the frame members 8 of the solar cell modules 2 of the solar photovoltaic system can be electrically conducted to each other, and, therefore, the solar cell modules 2 can be arranged so as to be easily grounded.

Furthermore, in this embodiment, it is assumed that the row direction A is a direction orthogonal to the water flow direction C, and that the column direction B is a direction along the water flow direction C, but it may be conversely assumed that the row direction A is a direction along the water flow direction C, and that the column direction B is a direction orthogonal to the water flow direction C, where sides of the solar cell modules 2 arranged in the column direction B (a direction orthogonal to the water flow direction C) are coupled and connected to each other with the inter-row coupling fittings 5, and sides of the solar cell modules 2 in the row direction A (the water flow direction C) are coupled and connected to each other with the matrix coupling fittings 4.

Above, a preferred embodiment was described with reference to the appended drawings, but of course the invention is not limited by those examples. It will be clear to those skilled in the art that within the category described in the claims, various modified or revised examples can be arrived at, and it will be understood that such examples also are naturally encompassed by the technical scope of the invention.

### Industrial Applicability

The present invention is useful for supporting structural members such as solar cell modules or reflective mirror panels used in solar heat power generation.

### Description of Reference Numerals

- 1: Solar photovoltaic system
- 2: Solar cell module
- 4: Matrix coupling fitting
- 4d: Engagement recess portion
- 5: Inter-row coupling fitting
- 5m, 5n: Engagement portion
- 6: Fixture fitting
- 7: Solar cell panel
- 8: Frame member
- 11: Attachment fitting
- 12: Bolt
- 13: Screw

## Claims

1. A solar cell module support structure for supporting a plurality of solar cell modules arranged in row and column directions, comprising:
a matrix coupling unit in which two engagement portions respectively facing mutually opposite outer directions are formed;
wherein the matrix coupling unit is disposed between rows of four solar cell modules arranged in two rows and two columns, frame members of two of the solar cell modules arranged in one row are engaged with one of the engagement portions of the matrix coupling unit, and frame members of the other two solar cell modules arranged in the other row are engaged with the other engagement portion of the matrix coupling unit, so that the four solar cell modules are coupled to each other with the matrix coupling unit.

2. The solar cell module support structure according to claim 1, further comprising:
an inter-row coupling unit in which two engagement portions respectively facing mutually opposite outer directions are formed;
wherein the inter-row coupling unit is disposed between frame members of two solar cell modules arranged in a column, and the frame members of the solar cell modules are respectively engaged with the engagement portions of the inter-row coupling unit, so that the two solar cell modules are coupled to each other with the inter-row coupling unit.

3. The solar cell module support structure according to claim 2, further comprising means for fixing the inter-row coupling unit to a base of the solar cell module support structure.

4. The solar cell module support structure according to claim 3, wherein two of the said inter-row coupling units are used on a solar cell module that is disposed between other solar cell modules on both sides, and points near centers of mutually opposing frame members of the solar cell module are fixed and supported on the base of the solar cell module support structure.

5. The solar cell module support structure according to claim 3 or 4, wherein the means for fixture to the base of the solar cell module support structure is a fixture fitting that supports the inter-row coupling unit so as to be movable in the column direction.

6. The solar cell module support structure according to any one of claims 1 to 5, wherein the matrix coupling unit is screwed into the frame members of two solar cell modules that have been engaged with the engagement portion of the matrix coupling unit.

7. The solar cell module support structure according to any one of claims 1 to 6, wherein the matrix coupling unit has protrusions that tightly grip the frame members of the solar cell modules that have been engaged with the engagement portions of the matrix coupling unit.

8. The solar cell module support structure according to any one of claims 2 to 7, wherein the inter-row coupling unit has protrusions that tightly grip the frame members of the solar cell modules that have been engaged with the engagement portions of the inter-row coupling unit.

9. A solar cell module support structure for supporting a plurality of solar cell modules arranged in row and column directions, comprising:
a matrix coupling unit in which two engagement portions respectively facing mutually opposite outer directions are formed;
an inter-row coupling unit in which two engagement portions respectively facing mutually opposite outer directions are formed; and
a fixture unit that is fixed to a base of the solar cell module support structure and that supports the inter-row coupling unit;
wherein the matrix coupling unit is disposed between rows of four solar cell modules arranged in two rows and two columns, frame members of two of the solar cell modules arranged in one row are engaged with one of the engagement portions of the matrix coupling unit, and frame members of the other two solar cell modules arranged in the other row are engaged with the other engagement portion of the matrix coupling unit, so that the four solar cell modules are coupled to each other with the matrix coupling unit, and
the inter-row coupling unit is disposed between frame members of two solar cell modules arranged in a column, and the frame members of the solar cell modules are respectively engaged with the engagement portions of the inter-row coupling unit, so that the two solar cell modules are coupled to each other with the inter-row coupling unit.

10. A method for installing the solar cell module support structure according to claim 9, comprising the steps of:
fixing and supporting frame members of a first solar cell module, which is disposed first, on at least three locations using at least three pairs of said inter-row coupling units and said fixture units; and
fixing and supporting frame members of a second or subsequent solar cell module on at least two locations using at least two pairs of said inter-row coupling units and said fixture units, and coupling the frame member of the solar cell module via the matrix coupling unit to the frame members of other already arranged solar cell modules.

11. The method for installing the solar cell module support structure according to claim 10, further comprising the step of fixing and supporting points near centers of mutually opposing frame members of a solar cell module that is disposed between other solar cell modules on both sides, using
two pairs of said inter-row coupling units and said fixture units.

12. A solar photovoltaic system using the solar cell module support structure according to any one of claims 1 to 9.
